# EUROPÄISCHE PATENTSCHRIFT

(11) **EP 0 372 202 B1**
(45) Veröffentlichungstag und Bekanntmachung des Hinweises auf die Patenterteilung: **11.08.1993**
(21) Anmeldenummer: 89119331.0
(22) Anmeldetag: 18.10.1989
(51) Int. Cl.: F16K 27/06

(54) **Geschweisstes Gehäuse für einen Kugelhahn**
Welded housing for a ball valve
Boîtier soudé pour un robinet à tournant sphérique

(30) Priorität: 02.12.1988 DE 3840626
(43) Veröffentlichungstag der Anmeldung: 13.06.1990
(73) Patentinhaber: DEUTSCHE BABCOCK- BORSIG AKTIENGESELLSCHAFT, 13507 Berlin (DE)
(72) Erfinder: Bruchhold, Ingo, Dr., D-1000 Berlin 10 (DE); Hoffmann, Michael, D-1000 Berlin 51 (DE)
(74) Vertreter: Müller, Jürgen, Dipl.-Ing.

(56) Entgegenhaltungen:
- DE-A- 2 927 080
- DE-B- 1 283 049
- DE-B- 2 347 825
- FR-A- 1 464 861
- PATENT ABSTRACTS OF JAPAN Band 7, Nr. 137 (M-222)(1282), 15 Juni 1983; & JP - A - 58050375 (KOBE SEIKOSHO K.K.) 24-03.1983
- idem

## Beschreibung

Die Erfindung betrifft ein geschweißtes Gehäuse insbesondere für einen Kugelhahn. Ein derartiges Gehäuse mit den Merkmalen des Oberbegriffes des Anspruches 1 ist aus der DE-B-2 347 825 bekannt.

In der DE-B-2 347 825 ist ein asymmetrisch geteiltes Gehäuse eines Kugelhahnes beschrieben, bei dem die Teilfuge unter einem Winkel zu der durch die Drehachse des Kugelkükens verlaufenden Ebene gelegt ist. Die die Zapfen des Kugelkükens umschließenden Lagerstutzen sind jeweils auf eine der Gehäusehälften aufgeschweißt. Die Gehäusehälften samt der eingeschweißten Anschluß- und Lagerstutzen werden entlang der Teilfuge miteinander verschweißt, nachdem alle Innenteile, das sind das Kugelküken und die Sitzringe, in eine der Gehäusehälften eingelegt wurden.

Das Gehäuse des aus der DE-B-2 347 825 bekannten Kugelhahnes ist unter dem Gesichtspunkt gestaltet, daß sich keine Schweißnähte kreuzen. Sollen die Innenteile des Kugelhahnes ausgetauscht werden, so muß das Gehäuse aufgetrennt werden. Da die Lagerstutzen einteilig sind, kann eine solche Trennung nur entlang der durch die Drehachse verlaufenden Ebene geführt werden. Das bedeutet eine Zerstörung der Lagerstutzen.

Aus der DE-A-2 927 080 ist ein Kugelhahn mit einem symmetrisch geteilten Gehäuse bekannt, in dem ein mit einem Zapfen versehenes Kugelküken drehbar gelagert ist. Der Zapfen ist von einem Lagersitz umschlossen, der aus zwei zu einer durch die Längsachse des Zapfens verlaufenden Teilungsebene symmetrischen Hälften besteht. Jede Lagersitzhälfte ist einem Teil des Gehäuses zugeordnet.

Der Erfindung liegt die Aufgabe zugrunde, ein geschweißtes Gehäuse der gattungsgemäßen Art derart zu gestalten, daß die Montage des Gehäuses und die Ausbildung des Kugelkükens vereinfacht werden und daß nach einer Auftrennung des Gehäuses die Lagersitze erhalten bleiben.

Diese Aufgabe wird bei einem gattungsgemäßen Gehäuse erfindungsgemäß durch die kennzeichnenden Merkmale des Anspruches 1 gelöst. Vorteilhafte Ausgestaltungen der Erfindung sind in den Unteransprüchen angegeben.

Das erfindungsgemäße Gehäuse kann in einer die Lagersitze aussparenden Ebene vorzugsweise entlang der Teilfuge aufgetrennt werden. Da der Lagersitz symmetrisch geteilt ist, kann das Kugelküken aus den voneinander getrennten Gehäusehälften herausgenommen werden. Aufgrund der Möglichkeit, das Gehäuse in der beschriebenen Weise zu trennen, kann das Kugelküken zusammen mit den Zapfen ein Stück bilden, wodurch die Herstellung, die Montage oder Demontage des Kugelkükens vereinfacht werden. Für eine erneute Montage der Gehäuse braucht nach einer Auftrennung des Gehäuses nur zusätzlich der Schweißnahtbereich vorbereitet zu werden. Da die Lagersitze in die Gehäuseteile integriert sind, werden die Druckkräfte aus dem den Kugelhahn durchströmenden Medium, die auf das Kugelküken wirken, auf kurzem direktem Weg über die Zapfen in das Gehäuse eingeleitet.

Zwei Ausführungsbeispiele der Erfindung sind in der Zeichnung dargestellt und werden im folgenden näher erläutert. Es zeigen:
- Fig. 1: in Explosionsdarstellung ein aus zwei Gehäuseteilen bestehendes Gehäuse für einen Kugelhahn und
- Fig. 2: im Längsschnitt eine andere Ausführungsform eines Gehäuses für einen Kugelhahn.

Das Gehäuse 1 eines Kugelhahnes besteht aus zwei Gehäuseteilen 2, 3, die an einer Teilfuge 4 aneinanderstoßen. Jedes Gehäuseteil 2, 3 ist mit einem Anschlußstutzen 5, 6 versehen, die in eine Rohrleitung eingesetzt werden. Die beiden Gehäuseteile 2, 3 umgrenzen einen Innenraum 7, der ein mit einer Durchgangsbohrung versehenes Kugelküken aufnimmt. Dieses aus Gründen der Übersichtlichkeit nicht dargestellte Kugelküken ist senkrecht zur Durchgangsbohrung mit zwei Zapfen versehen, die in Lagersitzen 8 drehbar gehalten sind.

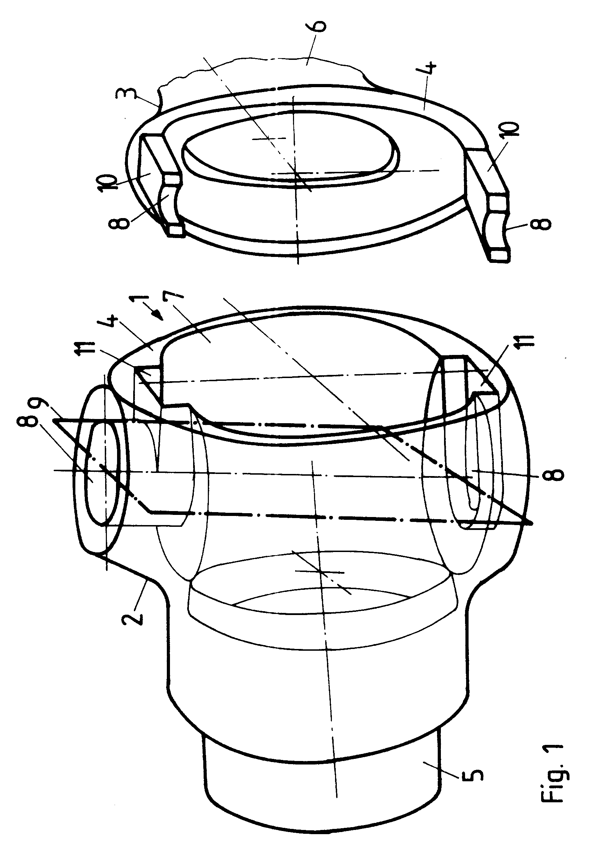

Die Lagersitze 8 sind symmetrisch geteilt, wobei die Teilungsebene 9 in Längsrichtung der Zapfen bzw. der Lagersitze 8 liegt. Die Teilfuge 4 des Gehäuses 1 liegt außerhalb der Teilungsebene der Lagersitze 8. Gemäß Fig. 1 sind Teilfuge 4 und Teilungsebene 9 in einem Abstand voneinander und parallel zueinander durch das Gehäuse 1 gelegt.

Jedem Gehäuseteil 2, 3 ist eine Hälfte des symmetrisch geteilten Lagersitzes 8 zugeordnet. Zu diesem Zweck ist das eine Gehäuseteil 3 mit einem Vorsprung 10 und das andere Gehäuseteil 2 mit einer dem Vorsprung 10 entsprechenden Ausnehmung 11 versehen. Die Stirnflächen von Vorsprung 10 und Ausnehmung 11 sind halbkreisförmig nach innen gewölbt. Der Vorsprung 10 greift im zusammengefügten Zustand der Gehäuseteile 2, 3 durch die Ausnehmung 11, so daß zwischen dem Vorsprung 10 und der Ausnehmung 11 der Lagersitz 8 gebildet wird.

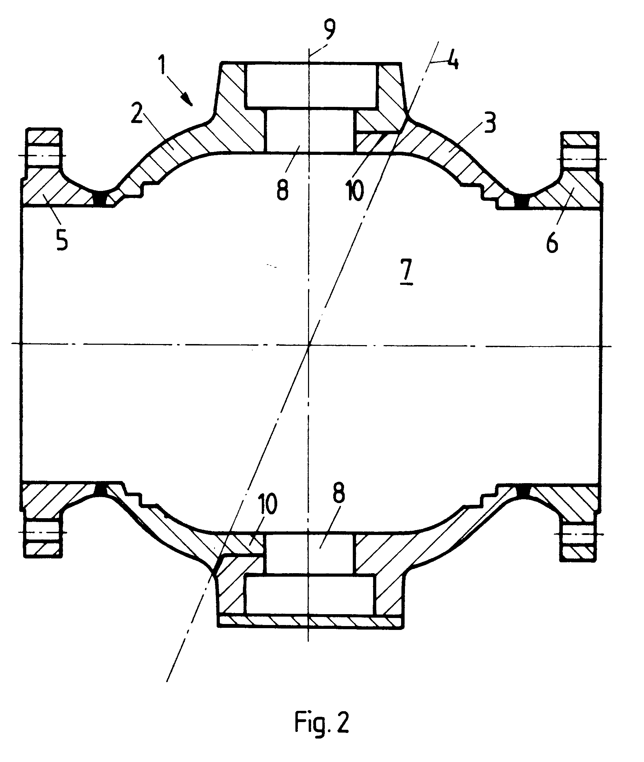

Wie in Fig. 2 verdeutlicht ist, kann die Teilfuge 4 auch unter einem Winkel zur Teilungsebene 9 verlaufen. Zur Bildung des Lagersitzes 8 ist in diesem Fall ein Gehäuseteil 2, 3 jeweils mit einem Vorsprung 10 und einer Ausnehmung 11 versehen.

Außer für Kugelhähne kann die erfindungsgemäße Gehäuseteilung auch für andere Gehäuse eingesetzt werden, in denen mit Hilfe von Zapfen ein Bauteil drehbar oder teilweise drehbar gelagert ist. Zur Montage wird das Kugelküken mit den angeformten Zapfen in das eine Gehäuseteil 2 eingesetzt. Im Falle des Gehäuses gemäß Fig. 1 ist dieses das mit den Ausnehmungen 11 versehene Gehäuseteil 2. Danach wird das mit den Vorsprüngen 10 versehene Gehäuseteil 3 eingeschoben. Die beiden Gehäuseteile 2, 3 werden entlang der Teilfuge 4 miteinander verschweißt. Soll zum Austausch des Kugelkükens und anderer Innenteile das Gehäuse 1 aufgeschnitten werden, so erfolgt die Trennung entlang der Teilfuge 4. Nach dem Durchtrennen können die Gehäuseteile 2, 3 auseinandergezogen werden, wonach die Innenteile als Ganzes herausgenommen werden können. Bei der Auftrennung des Gehäuses 1 bleiben die Lagersitze 8 erhalten, da sie symmetrisch geteilt sind und da die Teilungsebene 9 außerhalb der Teilfuge 4 liegt. Die aufgetrennten Gehäuseteile 2, 3 lassen sich nach einer Vorbereitung des Schweißnahtbereiches erneut zusammenbauen.

## Patentansprüche

1. Geschweißtes Gehäuse, insbesondere für einen Kugelhahn, mit zwei in einer Teilfuge (4) aneinanderstoßenden Gehäuseteilen (2, 3), die ein drehbares Bauteil (Kugelküken) aufnehmen, das mit einem von einem Lagersitz (8) umschlossenen Zapfen versehen ist, wobei die Teilfuge (4) außerhalb einer durch die Längsachse des Zapfens verlaufenden Teilungsebene (9) liegt, dadurch gekennzeichnet, daß der Lagersitz (8) aus zwei zur Teilungsebene (9) symmetrischen Hälften besteht; jede dieser Lagersitzhälften einem Gehäuseteil (2, 3) zugeordnet ist; und das eine Gehäuseteil (3) mit einem Vorsprung (10) und das andere Gehäuseteil (2) mit einer Ausnehmung (11) versehen ist, wobei der Vorsprung (10) des einen Gehäuseteiles (3) durch die Ausnehmung (11) in das andere Gehäuseteil (2) hineingreift und mit diesem den Lagersitz (8) bildet.

2. Gehäuse nach Anspruch 1, dadurch gekennzeichnet, daß die Teilfuge (4) in einem Abstand von und parallel zu der Teilungsebene (9) des Lagersitzes (8) gelegt ist.

3. Gehäuse nach Anspruch 1, dadurch gekennzeichnet, daß die Teilfuge (4) unter einem spitzen Winkel zur Teilungsebene (9) des Lagersitzes (8) verläuft und diese schneidet.

## Claims

1. Welded housing, especially for a ball cock, with two housing parts (2, 3) which abut one another in a parting line (4) and which receive a rotatable component (ball plug), which is provided with a spigot surrounded by a bearing seat (8), wherein the parting line (4) lies outside a dividing plane (9) extending through the longitudinal axis of the spigot, characterised thereby that the bearing seat (8) consists of two halves symmetrical with respect to the dividing plane (9), each of these bearing seat halves is associated with a housing part (2, 3), and the one housing part (3) is provided with a projection (10) and the other housing part (2) with a recess (11), wherein the projection (10) of the one housing part (3) engages through the recess (11) in the other housing part (2) and forms the bearing seat (8) therewith.

2. Housing according to claim 1, characterised thereby that the parting line (4) is placed at a spacing from and parallel to the dividing plane (9) of the bearing seat (8).

3. Housing according to claim 1, characterised thereby, that the parting line (4) extends at an acute angle to the dividing plane (9) of the bearing seat (8) and intersects this.

## Revendications

1. Carter soudé, en particulier pour un robinet à boisseau sphérique avec deux parties de carter (2, 3), réunies en un joint de séparation (4), recevant un élément de construction tournant (boisseau sphérique), pourvu d un tourillon entouré par un siège de palier (8), le joint de séparation (4) étant situé hors d'un plan de séparation (9) passant par l'axe longitudinal du tourillon, caractérisé en ce que le siège de palier (8) est composé de deux moitiés symétriques par rapport au plan de séparation (9); à chacune de ces deux moitiés est associée une partie de carter (2, 3); et une partie de carter (3) étant pourvue d'une saillie (10) et l'autre partie de carter (2) pourvue d'un évidement (11), la saillie (10) de la partie de carter (3) pénétrant dans l'évidement (11) de l'autre partie de carter (2) et formant avec cette dernière le siège de palier (8).

2. Carter selon la revendication 1, caractérisé en ce que le joint de séparation (4) est espacé par rapport à et parallèle au plan de séparation (9) du siège de palier (8).

3. Carter selon la revendication 1, caractérisé en ce que le joint de séparation (4) s'étend en faisant un angle aigu par rapport au plan de séparation 9 du siège de palier (8) et en le coupant.
